# EUROPÄISCHE PATENTSCHRIFT

(11) **EP 0 882 613 B1**
(45) Veröffentlichungstag und Bekanntmachung des Hinweises auf die Patenterteilung: **24.10.2001**
(21) Anmeldenummer: 98109387.5
(22) Anmeldetag: 23.05.1998
(51) Int. Cl.: B60J 7/10, B60J 7/06

(54) **Planendach für Fahrzeugaufbauten u.Container**
Tarpaulin for vehicle bodies and container
Bâche pour carrosseries de véhicule et conteneurs

(30) Priorität: 02.06.1997 DE 29709541 U
(43) Veröffentlichungstag der Anmeldung: 09.12.1998
(73) Patentinhaber: Edscha LKW-Schiebeverdecke GmbH, 42855 Remscheid (DE)
(72) Erfinder: Remmel, Roger, 42897 Remscheid (DE); Drasch, Josef, 94577 Winzer (DE)
(74) Vertreter: Sparing, Rolf Klaus

(56) Entgegenhaltungen:
- EP-A- 0 621 151
- DE-A- 3 929 425
- FR-A- 2 653 478

## Beschreibung

Die Erfindung bezieht sich auf ein Planendach oder Container gemäß dem Oberbegriff des Patentanspruchs 1.

Planendächer der vorgenannten Bauart werden grundsätzlich dort eingesetzt, wo eine zumindest gelegentliche Beladung des Fahrzeugs oder Containers von oben erforderlich ist. Bei einer bekannten Bauart eines Planendaches der vorgenannten Bauart für Fahrzeugaufbauten oder Container sind die die Dachplane tragenden Spriegel derart mit den oberen des Fahrzeugaufbaues bzw. des Containers verbunden, daß sie ausschließlich durch Demontage von diesen gelöst werden können und die Plane zum Zwecke eines Öffnens des Planendaches aufgerollt werden muß. Bei einer solchen Gestaltungsform eines Planendaches erfordert das Öffnen des Daches einen Arbeits- und Kraftaufwand.

Bei anderen bekannten Bauarten von Planendächern für Fahrzeugaufbauten oder Container ist vorgesehen daß die die Dachplane tragenden Spriegel über Rollen oder dergleichen längsverfahrbar in führungsschienenartigen Profilformen der oberen Längsgurte eines Fahrzeugaufbaues abgestützt sind. Derartige Planendächer zeichnen sich zwar dadurch aus, daß ein Öffnen des Daches verhältnismäßig leicht zu bewerkstelligen ist, sind aber andererseits mit dem Nachteil eines erheblichen Herstellungsaufwandes behaftet, dies insbesondere dann, wenn für die Ausbildung der oberen Längsgurte eines Fahrzeugaufbaues oder eines Containers ein handelsübliches Profilmaterial, wie es beispielsweise für den Aufbau von üblichen Schiebeverdecken verwendet wird, eingesetzt wird.

Die FR-A-2 653 478 entspricht dem Oberbegriff des Anspruchs 1 und offenbart eine eine mobile Abdeckung bildende Vorrichtung zum Antrieb und zur Verlagerung vom Trägerelement für Planen. Sie zeigt und beschreibt ein Planendach für Fahrzeuge mit Stim- und Seitenwandungen, deren Aufbauhöhe von Längsgurten begrenzt wird, die durch Profilschienen gebildet werden. Eine den Dachbereich des Aufbaus übergreifende Plane wird von Spriegeln getragen, die die Ladeflächenbreite überspannen und an den oberen Längsgurten abgestützt sind. Die Spriegel sind an beiden Enden mittels formschlüssigen Eingriffen in horizontaler und vertikaler Richtung an längsgerichteten Profilstegen der oberen Längsgurte durch Rollen abgestützt.

Auch die EP-A-0 621 151 und DE-A-39 29 425 zeigen Spriegel von Fahrzeug-Planendächern, die an beiden Enden mittels formschlüssigen Eingriffes in horizontaler und vertikaler Richtung an längsgerichteten Profilstegen von oberen Längsträgern durch Rollen abgestützt sind.

Die Ausbildung der die Spriegel abstützenden Eingriffsmittel als Rollen ist sehr aufwendig.

Der Erfindung liegt die Aufgabe zugrunde, ein Planendach der eingangs bezeichneten Bauart für Fahrzeugaufbauten oder Container dahingehend mit einfachsten Mitteln ohne großen Aufwand weiter zu verbessern, daß auch bei Verwendung eines handelsüblichen Prolilmaterials für die oberen Längsgurte des Fahrzeugaufbaues zum Zwecke eines Öffnens des Daches die die Dachplane tragenden Spriegel nicht nur in eine gegenüber den oberen Längsgurten des Fahrzeugaufbaues verschiebbare, sondern auch in eine von den oberen Längsgurten abhebbare Stellung verbracht werden können.

Diese Aufgabe wird ausgehend von einem Planendach der eingangs genannten Bauart durch die Kombination der Merkmale gemäß Patentanspruch 1 gelöst.

Darüber hinaus sollte das Planendach so ausgestattet sein, daß das Verlieren von Einzelteilen vermieden werden kann.

Eine dieserart ausgebildete Abstützung der Spriegel durch gleitendes Zusammenwirken der Eingriffsmittel mit den Profilstegen der oberen Längsgurte eines Fahrzeugaufbaues oder Containers ist in Verbindung mit dem Einsatz jeder beliebigen, insbesondere in Verbindung mit jeder bekannten Querschnittsform eines für die Ausbildung der oberen Längsgurte bei einem Schiebeverdeck geeigneten Profilmaterials verwendbar, so daß für die Verwirklichung eines erfindungsgemäßen Planendaches mit einfachsten Mitteln ohne großen Aufwand auf jedes beliebige, vorhandene Profilmaterial zurückgegriffen werden kann. Zugleich ermöglicht die Anwendung je eines eigenständigen Eingriffsmittels sowohl für die Abstützung des Spriegels in horizontaler als auch in vertikaler Richtung ein müheloses Versetzen des Spriegels in eine gegenüber den Längsgurten bewegliche Stellung, wobei sowohl eine von den Längsgurten abhebbare als auch eine gegenüber den Längsgurten verschiebbare Stellung der Spriegelabstützungen möglich ist.

In praktischer Verwirklichung eines solchen Planendaches ist vorteilhafterweise vorgesehen, daß die Spriegel jeweils aus einem durch einen Längenabschnitt eines Profilmaterials gebildeten Schaftteil bestehen und beidendig mit jeweils einem an den Schaftteil angeschlossenen, einen oberen Längsgurt übergreifenden, wenigstens winkelförmigen Endteil ausgestattet sind, wobei die dessen Abstützung in horizontaler Richtung zugeordneten Eingriffsmittel jeweils an dem einen oberen Längsgurt übergreifenden Endteil des Spriegels angeordnet sind und wobei ferner die dessen Abstützung in vertikaler Richtung zugeordneten Eingriffsmittel jeweils mit dem Schaftteil des Spriegels verbunden sind.

Eine bevorzugte Ausgestaltungsform, welche es in einfachster Weise gestattet, beim Öffnen des Daches die die Dachplane tragenden Spriegel in eine gegenüber den oberen Längsgurten des Fahrzeugaufbaues zumindest verschiebbare Stellung zu verbringen sieht vor, daß die der Abstützung des Spriegels in horizontaler Richtung zugeordnete Eingriffsmittel lösbar mit dem Schaftteil des Spriegels verbunden sind.

Eine mit einfachsten Mitteln realisierbare Ausgestaltungsform sieht dabei vor, daß die dessen Abstützung in vertikaler Richtung zugeordneten Eingriffsmittel jeweils durch ein das Schaftteilende des Spriegels umgreifendes, an seinem den Spriegelschaft überragenden Ende ein mit wenigstens einem horizontal ausgerichteten Profilsteg des oberen Längsgurtes zusammenwirkendes Formteil aufweisendes Ansatzteil gebildet und mit dem Schaftteil des Spriegels vermittels eines durchgehenden, lösbaren Verbindungsmittels verbindbar ist.

Das durchgehende, lösbare Verbindungsmittel ist zweckmäßigerweise als Federstecker ausgebildet, dessen Steckerstift je eine Durchgangsbohrung in dem den Spriegelschaft umgreifenden Bereich des Ansatzteiles durchgreift und dessen Federteil das Ansatzteil wenigstens teilweise umgreift.

Im Einzelnen kann dabei zur Vermeidung verlierbarer Einzelteile weiterhin vorgesehen sein, daß jedes ein der Abstützung des Spriegels in vertikaler Richtung zugeordnete Eingriffsmittel tragende Ansatzteil mit zwei in Spriegellängsrichtung zueinander beabstandeten Durchgangsbohrungen für den Stekkerstift des Federsteckers versehen ist, derart, daß das Ansatzteil mittels des Federsteckers in zwei unterschiedlichen Stellungen, sowohl in seiner Eingriffslage als auch in einer Lösestellung, am Spriegelschaft festlegbar und damit praktisch unverlierbar ist.

Die dessen Abstützung in horizontaler Richtung zugeordneten Eingriffsmittel sind vorteilhafterweise durch einen am übergreifenden Endbereich innenliegend angeordneten Blechwinkel, dessen freier nach unten weisender Profilschenkel mit einem vertikal ausgerichteten Profilsteg des Längsgurtes zusammenwirkt, gebildet.

Zur weiteren Verbesserung der Längsverschieblichkeit der Spriegel gegenüber den Längsgurten kann zudem vorgesehen sein, daß der lichte Abstand zwischen der Innenfläche der vertikal ausgerichteten Abwinkelung des einen oberen Längsgurt übergreifenden, winkelförmigen Endteiles eines Spriegels und der parallel gerichteten Außenfläche der Abwinkelung eines innenliegend angeordneten Blechwinkel, dessen freier nach unten weisender Profilschenkel mit einem vertikal ausgerichteten Profilsteg des Längsgurtes zusammenwirkt, größer ist als der Abstand der zugehörigen Flächen der vertikal ausgerichteten Profilstege eines oberen Längsgurtes.

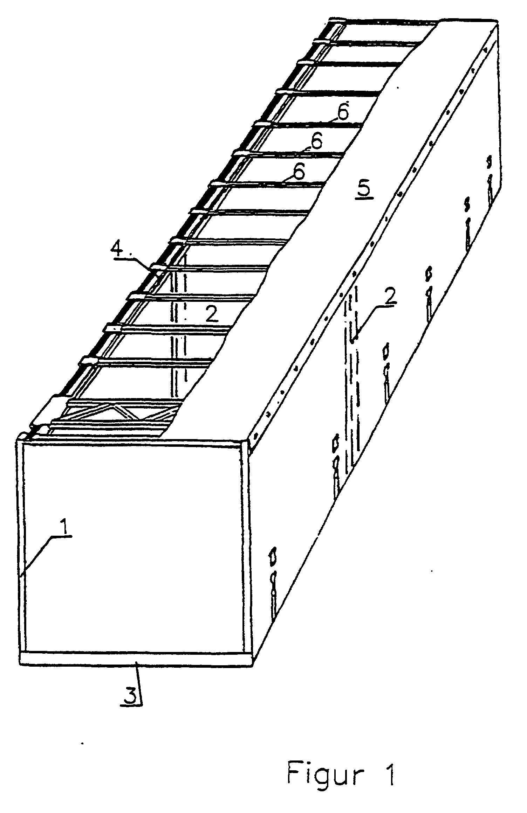

Die Erfindung ist in der nachfolgenden Beispielsbeschreibung anhand einiger in der Zeichnung dargestellter Ausführungsbeispiele im Einzelnen beschrieben. In der Zeichnung zeigt die
- Figur 1: eine schematische schaubildliche Darstellung eines mit einem Planendach ausgestatteten Fahrzeugaufbaues;
- Figur 2: einen Schnitt durch eine erste Ausführungsform der Spriegelabstützung an einem oberen Längsgurt eines Fahrzeugaufbaues;
- Figur 3: einen Schnitt durch eine zweite Ausführungsform der Spriegelabstützung an einem oberen Längsgurt eines Fahrzeugaufbaues;
- Figur 4: einen Schnitt durch eine dritte Ausführungsform der Spriegelabstützung an einem oberen Längsgurt eines Fahrzeugaufbaues;
- Figur 5: einen Schnitt durch eine vierte Ausführungsform der Spriegelabstützung an einem oberen Längsgurt eines Fahrzeugaufbaues;
- Figur 6: einen Schnitt durch eine abgewandelte Gestaltungsform der Spriegelabstützung an einem oberen Längsgurt eines Fahrzeugaufbaues in darstellerischer Anlehnung an die Ausführungsform nach Figur 4.

Das in der Zeichnung schematisch dargestellte Planendach für einen Fahrzeugaufbau besteht aus einem in der Hauptsache aus die Laderaumlänge überspannenden, über aufragende Stützen 1 und Rungen 2 gegen das Fahrzeugchassis 3 abgestützten oberen Längsgurten 4 bestehenden Verdeckgestell, bei dem eine mindestens den Dachbereich des Fahrzeugaufbaues übergreifende Dachplane 5 von die Ladeflächenbreite überspannenden und an den Längsgurten 4 des Verdeckgestelles abgestützten Spriegeln 6 getragen ist. Die Spriegel 6 sind in vorbestimmten Abständen vermittels an dieser angebrachter Schlaufen lösbar mit der Dachplane verbunden.
Die Spriegel 6 bestehen jeweils aus einem durch einen Längenabschnitt eines Profilmaterials gebildeten Schaftteil 7 und beidendig an dieses angeschlossenen, einen oberen Längsgurt 4 übergreifenden winkelförmigen Endteilen 8, wobei der Abstützung eines Spriegels 6 in horizontaler Richtung zugeordnete Eingriffsmittel 9 jeweils an dem einen oberen Längsgurt 4 übergreifenden Endteil 8 eines Spriegels 6 angeordnet sind und wobei ferner der Abstützung eines Spriegels 6 in vertikaler Richtung zugeordnete Eingriffsmittel 10 jeweils mit dem Schaftteil 7 eines Spriegels 6 verbunden sind. Die der Abstützung eines Spriegels 6 in vertikaler Richtung zugeordneten Eingriffsmittel 10 sind jeweils lösbar mit dem Schaftteil 7 des Spriegels 6 verbunden. Bei allen in der Zeichnung dargestellten Ausführungsbeispielen ist hierzu vorgesehen, daß die der Abstützung eines Spriegels 6 in vertikaler Richtung zugeordneten Eingriffsmittel 10 jeweils durch ein das Schaftteil 7 eines Spriegels 6 umgreifendes, im Wesentlichen U-förmiges und an seinem den Spriegelschaft 7 überragenden Ende ein mit wenigstens einem horizontal ausgerichteten Profilsteg 11 eines oberen Längsgurtes 4 zusammenwirkendes Formteil 12 aufweisendes Ansatzteil 13 gebildet ist. Mit dem Schaftteil 7 des Spriegels 6 ist das Ansatzteil 13 jeweils vermittels eines als Federstecker 14 ausgebildeten durchgehenden Verbindungsmittels verbindbar. Der Steckerstift 15 eines Federsteckers 14 durchsetzt dabei je eine Durchgangsbohrung in dem den Spriegelschaft 7 und im umgreifenden Profilschenkel 16 des U-förmigen Ansatzteiles 13. Der bügelförmige Federteil 17 des Federsteckers 14 hingegen umgreift das Ansatzteil 13 teilweise, um den Steckerstift 15 in seiner Eingriffslage zu sichern. Zur Vermeidung verlierbarer Einzelteile ist jedes Ansatzteil 13 mit zwei in Spriegellängsrichtung zueinander beabstandeten Durchgangsbohrungen 18 und 19 für den Steckerstift 15 des Federsteckers 14 versehen, derart, daß das Ansatzteil 13 mittels des Federsteckers 15 sowohl in seiner Eingriffslage als auch in einer Lösestellung am Spriegelschaft 7 festlegbar ist.

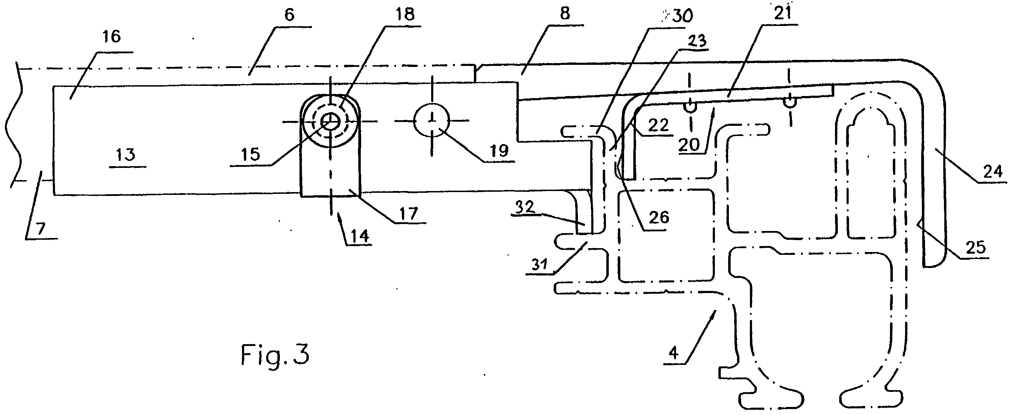

Bei den in den Figuren 3 bis 5 dargestellten Ausführungsformen sind die der Abstützung eines Spriegels 6 in horizontaler Richtung zugeordneten Eingriffsmittel 20 durch einen am übergreifenden Endteil 8 innenliegend angeordneten Blechwinkel 21 gebildet, dessen freier nach unten weisender Profilschenkel 22 mit einem vertikal ausgerichteten Profilsteg 23 des Längsgurtes 4 zusammenwirkt. Der lichte Abstand zwischen der Innenfläche 25 der vertikal ausgerichteten Abwinkelung 24 des einen oberen Längsgurt 4 übergreifenden, winkelförmigen Endteiles 8 eines Spriegels 6 und der parallel gerichteten Außenfläche 26 der vertikal gerichteten mit einem vertikal ausgerichteten Profilsteg des Längsgurtes 4 zusammenwirkenden Abwinkelung 22 des Blechwinkels 21 ist größer als der Abstand der zugehörigen Flächen der vertikal ausgerichteten Profilstege eines oberen Längsgurtes 4.

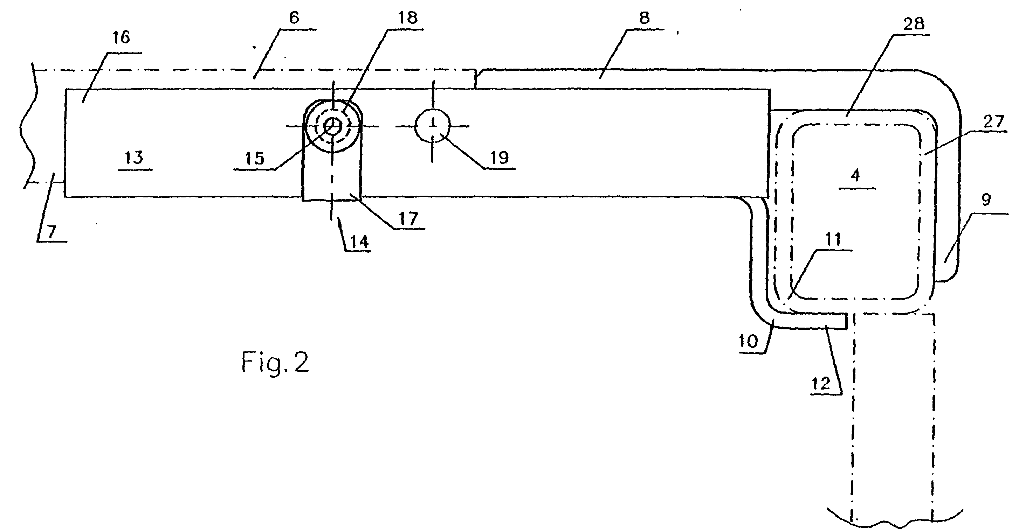

Bei der in der Figur 2 dargestellten einfachsten Profilquerschnittsform eines oberen Längsgurtes 4 eines Fahrzeugaufbaues weist dieser eine einfache rechteckige Profilquerschnittsform auf und ist an seiner obenliegenden 28 und seiner außenliegenden Profilseite 27 von dem Endteil 8 des Spriegels 6 formschlüssig umgriffen. Der vertikal abgewinkelte Profilschenkel 9 des Endteiles 8 bildet dabei die Abstützung des Spriegels 6 in horizontaler Richtung. An seinem unten liegenden Profilsteg 11 ist der Längsgurt 4 von einer ein Eingriffsmittel bildenden, das Ende des Spriegelschaftes 7 überragenden Zunge 12 eines Ansatzteiles 13 untergriffen. Das Ansatzteil 13 weist hierbei einen im Wesentlichen U-förmigen mit zwei in Spriegellängsrichtung zueinander beabstandeten Durchgangsbohrungen 18 und 19 für ein als Federstecker 14 ausgebildetes Befestigungsmittel zur Festlegung am Spriegelschaft auf.

Bei der in der Figur 3 dargestellten abgewandelten Profilquerschnittsform eines oberen Längsgurtes 4 eines Fahrzeugaufbaues weist dessen Profilquerschnittsform einen vertikal aufragenden Profilsteg 23 und zwei in vertikaler Richtung zueinander beabstandete, horizontal ausgerichtete Profilstege 30 und 31 auf. Der Längsgurt 4 ist dabei insgesamt von einem an den Spriegelschaft 7 angeschlossenen, winkelförmigen Endteil 8 übergriffen. An der Innenfläche des horizontal gerichteten Bereiches des Endteiles 8 ist mittels Nieten ein Blechwinkel 21 befestigt, dessen nach unten abgewinkelter Profilschenkel 22 als horizontale Abstützung des Spriegels mit dem vertikal aufragenden Profilsteg 23 der Profilquerschnittsform des Längsgurtes 4 zusammenwirkt. Zwischen die beiden horizontal ausgerichteten Profilstege 30 und 31 der Profilquerschnittsform des Längsgurtes 4 greift eine das Ende des Spriegelschaftes 7 überragende Zunge 32 eines Ansatzteiles 13 ein. Das Ansatzteil 13 weist auch bei dieser Ausführungsform einen im Wesentlichen U-förmigen mit zwei in Spriegellängsrichtung zueinander beabstandeten Durchgangsbohrungen 18 und 19 für ein als Federstecker 14 ausgebildetes Befestigungsmittel ausgestattetes Befestigungsbereich zur Festlegung am Spriegelschaft 7 auf.

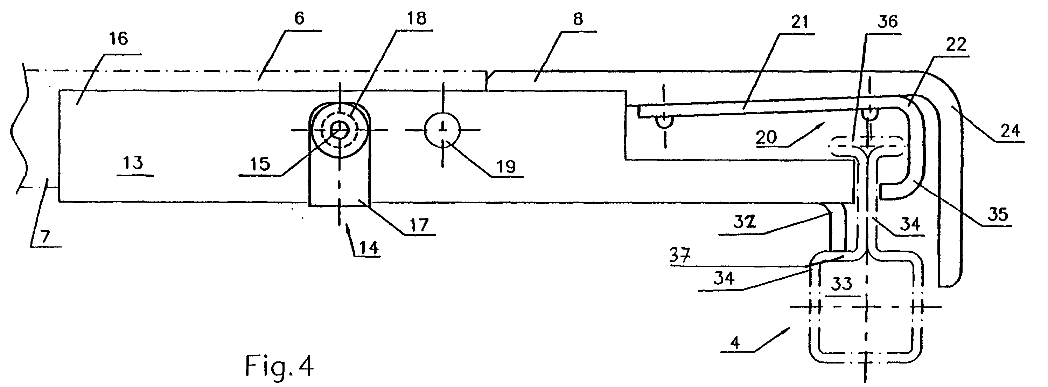

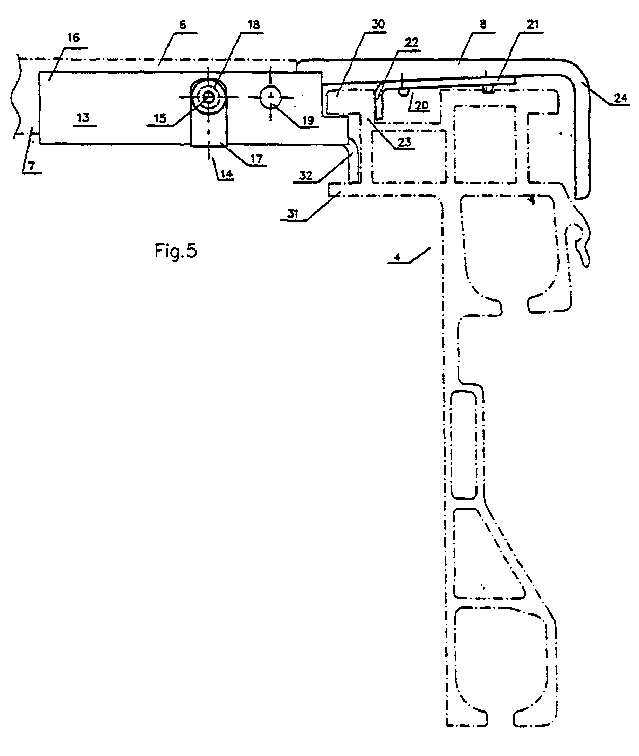

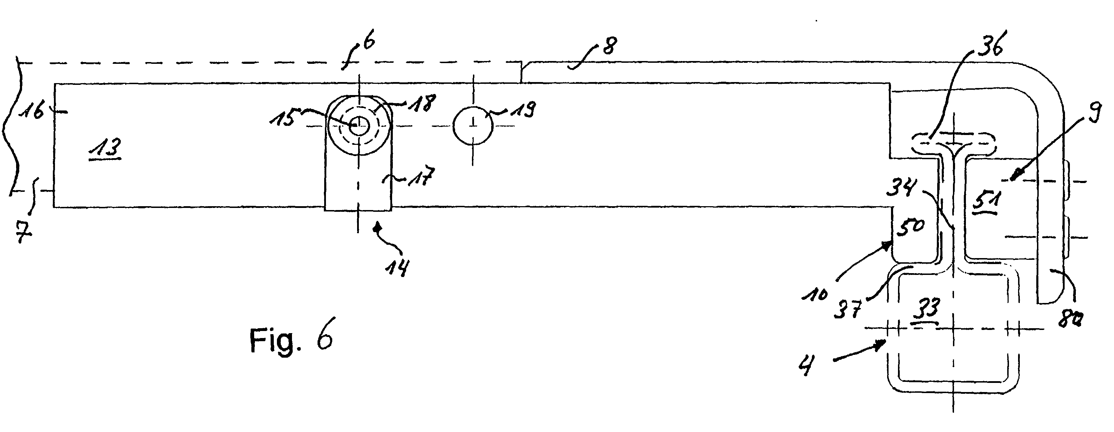

Bei der in der Figur 4 dargestellten weiter abgewandelten Profilquerschnittsform eines oberen Längsgurtes 4 eines Fahrzeugaufbaues besteht dieser aus einem Blechfaltprofil und umfaßt dessen Profilquerschnittsform einen eine rechteckigen Profilquerschnittsform aufweisenden Hohlträger 33 und eine oberseitig an diesen angeschlossene, eine T-förmige Querschnittsform aufweisende Profilschiene 34. Der Längsgurt 4 ist dabei gleichfalls insgesamt von einem an den Spriegelschaft 7 angeschlossenen, winkelförmigen Endteil 8 übergriffen. An der Innenfläche des horizontal gerichteten Bereiches des Endteiles 8 ist mittels Nieten ein Blechwinkel 21 befestigt, dessen nach unten abgewinkelter Profilschenkel 22 mit einer nach innen zurückgebogenen Abstellung 35 ausgestattet ist, welche als horizontale Abstützung des Spriegels 6 mit dem vertikal aufragenden Profilsteg der Profilschiene 34 der Profilquerschnittsform des Längsgurtes 4 zusammenwirkt. Zwischen den horizontal ausgerichteten Profilsteg 36 der Profilschiene und die Oberfläche 37 des Hohlträgers 33 des Längsgurtes 4 greift eine das Ende des Spriegelschaftes 7 überragende und vertikal abgestellte Zunge 32 eines Ansatzteiles 13 ein. Das Ansatzteil 13 weist im übrigen auch bei dieser Ausführungsform einen im Wesentlichen U-förmigen mit zwei in Spriegellängsrichtung zueinander beabstandeten Durchgangsbohrungen 18 und 19 für ein als Federstecker 14 ausgebildetes Befestigungsmittel ausgestattetes Befestigungsteil zur Festlegung am Spriegelschaft 7 auf.
Die in der Figur 5 dargestellte Ausführungsform entspricht hinsichtlich der Ausbildung der Abstützung der Spriegel 6 an den oberen Längsgurten 4 eines Fahrzeugaufbaues im Wesentlichen derjenigen nach Figur 3 ist jedoch im Zusammenhang mit einer für den Einsatz flexibler Seitenwandungen geeigneten Profilquerschnittsform eines oberen Längsgurtes eines Fahrzeugaufbaues dargestellt.
Die in der Figur 6 dargestellte Ausführungsform zeigt anhand einer Abwandlung der in Figur 4 dargestellten Ausführungsform eine besondere Gestaltungsform der in vertikaler Richtung wirkenden 10 und der in horizontaler Richtung wirkenden Eingriffsmittel 9 dahingehend, daß die mit den Profilstegen eines oberen Längsgurtes zusammenwirkenden Eingriffsmittel gleitsteinartig ausgebildet sind, wobei bei der dargestellten Ausbildung des oberen Längsgurtes 4 das zwischen den horizontal ausgerichteten Profilsteg 36 der Profilschiene 34 und die Oberfläche 37 des als Hohlträger 33 ausgebildeten Längsgurt 4 eingreifende in vertikaler Richtung wirkende Eingriffsmittel 10 durch einen die lichte Profilhöhe ausfüllenden Gleitstein 50 und das in horizontaler Richtung wirkende Eingriffsmittel 9 durch einen am vertikal aufragenden Profilsteg der Profilschiene 34 anliegenden Gleitstein 51 gebildet ist. Der Gleitstein 51 ist dabei mittels Bolzen oder Nieten an einem an den Spriegelschaft 7 angeschlossenen, winkelförmigen Endteil 80 befestigt, während der Gleitstein 50 am Ansatzteil 13 befestigt ist. Das Ansatzteil 13 weist im übrigen auch bei dieser Ausführungsform einen im Wesentlichen U-förmigen mit zwei in Spriegellängsrichtung zueinander beabstandeten Durchgangsbohrungen 18 und 19 für ein als Federstecker 14 ausgebildetes Befestigungsmittel ausgestattetes Befestigungsteil zur Festlegung am Spriegelschaft 7 auf.
Die in der Figur 6 beispielhaft dargestellte abgewandelte Gestaltungsform der Eingriffsteile 9 und 10 kann in analogerweise selbstverständlich auch im Zusammenhang mit allen sonstigen Ausbildungsformen eines oberen Längsgurtes angewandt werden.

## Patentansprüche

1. Planendach für Fahrzeugaufbauten oder Container, mit starren oder flexiblen Stirn- und Seitenwandungen und die Aufbauhöhe nach oben begrenzenden, durch Profilschienen gebildeten oberen Längsgurten (4), bei dem eine den Dachbereich des Aufbaues übergreifende Plane (5) von die Ladeflächenbreite überspannenden und an den Längsgurten des Aufbaues abgestützten Spriegeln (6) getragen ist, wobei die in vorgegebenen gleichmäßigen Abständen voneinander angeordneten und lösbar mit der Plane (5) verbundenen sowie die oberen Längsgurte (4) übergreifenden Spriegel (6) beidseitig mittels formschlüssigen Eingriffes in horizontaler und vertikaler Richtung an den längsgerichteten Profilstegen der oberen Längsgurte (4) abgestützt sind, und wobei an jedem der beiden Enden jedes Spriegels (6) je ein mit wenigstens einem vertikalen und je ein mit wenigstens einem horizontalen Profilsteg der oberen Längsgurte (4) längsverfahrbar zusammenwirkendes Eingriffsmittel (9, 10; 20, 32) vorgesehen ist,
**dadurch gekennzeichnet, daß**
die Eingriffsmittel (9, 10 ; 20, 32) gleitend mit den Profilstegen zusammenwirken, und das der Abstützung des Spriegels (6) in vertikaler Richtung Zugeordnete Eingriffsmittel (10; 32) lösbar mit dem Schaftteil (7) des Spriegels (6) verbunden ist.

2. Planendach nach Anspruch 1, **dadurch gekennzeichnet, daß** die Spriegel (6) jeweils aus einem durch einen Längenabschnitt eines Profilmaterials gebildeten Schaftteil (7) bestehen und beidendig mit jeweils einem an den Schaftteil (7) angeschlossenen, einen oberen Längsgurt (4) übergreifenden, wenigstens winkelförmigen Endteil (8) ausgestattet sind.

3. Planendach nach Anspruch 2, **dadurch gekennzeichnet, daß** die der Abstützung des Spriegels (6) in horizontaler Richtung zugeordneten Eingriffsmittel (9) jeweils an dem den oberen Längsgurt (4) übergreifenden Endteil (8) des Spriegels (6) angeordnet sind.

4. Planendach nach einem der Ansprüche 1 bis 3, **dadurch gekennzeichnet, daß** die der Abstützung des Spriegels (6) in vertikaler Richtung zugeordneten Eingriffsmittel (10) jeweils mit dem Schaftteil (7) des Spriegels (6) verbunden sind.

5. Planendach nach einem der Ansprüche 1 bis 4, **dadurch gekennzeichnet, daß** das der Abstützung des Spriegels (6) in horizontaler Richtung zugeordnete Eingriffsmittel (9) lösbar mit dem Schaftteil (7) des Spriegels (6) verbunden ist.

6. Planendach nach einem der Ansprüche 2 bis 5, **dadurch gekennzeichnet, daß** das der Abstützung des Spriegels (6) in vertikaler Richtung zugeordnete Eingriffsmittel (10) jeweils durch ein das Schaftteilende des Spriegels (6) umgreifendes, an seinem den Spriegelschaft (7) überragenden Ende ein mit wenigstens einem horizontal ausgerichteten Profilsteg des oberen Längsgurtes (4) zusammenwirkendes Formteil aufweisendes Ansatzteil (13) gebildet und mit dem Schaftteil (7) des Spriegels (6) vermittels eines durchgehenden, lösbaren Verbindungsmittels (15) verbindbar ist.

7. Planendach nach Anspruch 6, **dadurch gekennzeichnet, daß** das durchgehende, lösbare Verbindungsmittel als Federstecker (14) mit einem Steckerstift (15) und einem Federteil (17) ausgebildet ist, dessen Steckerstift (15) je eine Durchgangsbohrung (18,19) in dem den Spriegelschaft (7) umgreifenden Bereich des Ansatzteiles (13) durchgreift und dessen Federteil (17) das Ansatzteil (13) wenigstens teilweise umgreift.

8. Planendach nach Anspruch 7, **dadurch gekennzeichnet, daß** jedes ein der Abstützung des Spriegels (6) in vertikaler Richtung zugeordnetes Eingriffsmittel (10) tragende Ansatzteil (13) mit zwei in Spriegellängsrichtung zueinander beabstandeten Durchgangsbohrungen (18,19) für den Steckerstift (15) des Federsteckers (14) versehen ist.

9. Planendach nach einem der Ansprüche 3 bis 8, **dadurch gekennzeichnet, daß** die der Abstützung des Spriegels (6) in horizontaler Richtung zugeordneten Eingriffsmittel (20) durch einen am übergreifenden Endbereich innenliegend angeordneten Blechwinkel (21), dessen freier nach unten weisender Profilschenkel (22) mit einem vertikal ausgerichteten Profilsteg (23) des Längsgurtes (4) zusammenwirkt, gebildet ist.

10. Planendach nach Anspruch 9, **dadurch gekennzeichnet, daß** der lichte Abstand zwischen einer Innenfläche (25) einer vertikal ausgerichteten Abwinkelung (24) des den oberen Längsgurt (4) übergreifenden, winkelförmigen Endteiles (8) des Spriegels (6) und der parallel gerichteten Außenfläche der Abwinkelung des innenliegend angeordneten Blechwinkels (21), dessen freier nach unten weisender Profilschenkel (22) mit dem vertikal ausgerichteten Profilsteg (23) des Längsgurtes (4) zusammenwirkt, größer ist als der Abstand der zugehörigen Flächen der vertikal ausgerichteten Profilstege des oberen Längsgurtes (4).

11. Planendach nach Anspruch 10, **dadurch gekennzeichnet, daß** die mit den Profilstegen des oberen Längsgurtes (4) zusammenwirkenden Bereiche der Eingriffsmittel mit einer Kunststoffummantelung ausgestattet sind.

12. Planendach nach einem der Ansprüche 1 bis 8; **dadurch gekennzeichnet, daß** die Eingriffsmittel als Gleitsteine (50, 51) ausgebildet ist.

## Claims

1. Tarpaulin for vehicle bodies or containers, with rigid or flexible end and side walls and upper longitudinal belts (4) formed by profile rails which limit the body height at the top, in which a tarpaulin (5) covering the roof region of the body is supported by hoops (6) which bridge the loading area width and are supported on the longitudinal belts of the body, wherein the hoops (6) arranged at predetermined uniform distances from one another and detachably connected to the tarpaulin (5) and covering the upper longitudinal belts (4) are supported on both sides by interlocking engagement in the horizontal and vertical direction on the longitudinally aligned profiled webs of the upper longitudinal belts (4), and wherein engagement means (9, 10; 20, 32) longitudinally movably co-operating, one with at least one vertical profiled web of the upper longitudinal belts (4) and one with at least one horizontal profiled web of the upper longitudinal belts (4) are provided on each of the two ends of each hoop (6), **characterised in that** the engagement means (9, 10; 20, 32) co-operate with the profiled webs in a sliding manner and the engagement means (10; 32) associated with the support of the hoop (6) in the vertical direction is detachably connected to the shaft part (7) of the hoop (6).

2. Tarpaulin according to claim 1, **characterised in that** the hoops (6) each consist of a shaft part (7) formed by a longitudinal portion of a profiled material and are equipped at both ends with a respective at least angular end part (8) connected to the shaft part (7) and which covers an upper longitudinal belt (4).

3. Tarpaulin according to claim 2, **characterised in that** the engagement means (9) associated with the support of the hoop (6) in the horizontal direction are each arranged on the end part (8) of the hoop (6) covering the upper longitudinal belt (4)

4. Tarpaulin according to any one of claims 1 to 3, **characterised in that** the engagement means (10) associated with the support of the hoop (6) in the vertical direction are each connected to the shaft part (7) of the hoop (6).

5. Tarpaulin according to any one of claims 1 to 4, **characterised in that** the engagement means (9) associated with the support of the hoop (6) in the horizontal direction is detachably connected to the shaft part (7) of the hoop (6).

6. Tarpaulin according to any one of claims 2 to 5, **characterised in that** the engagement means (10) associated with the support of the hoop (6) in the vertical direction are each formed by an attachment (13) which embraces the shaft part end of the hoop (6) and, at its end projecting beyond the hoop shaft (7), has a moulded part which co-operates with at least one horizontally aligned profiled web of the upper longitudinal belt (4) and can be connected to the shaft part (7) of the hoop (6) by means of a continuous, detachable connecting means (15).

7. Tarpaulin according to claim 6, **characterised in that** the continuous detachable connecting means is formed as a spring connector (14) with a connector pin (15) and a spring part (17), the connector pin (15) of which penetrates one through-aperture (18, 19) respectively in the region of the attachment (13) embracing the hoop shaft (7) and the spring part (17) of which at least partially surrounds the attachment (13).

8. Tarpaulin according to claim 7, **characterised in that** each attachment (13) supporting an engagement means (10) associated with the support of the hoop (6) in the vertical direction is provided with two through-apertures (18, 19) for the connector pin (15) of the spring connector (14) which are spaced apart from one another in the longitudinal direction of the hoop.

9. Tarpaulin according to any one of claims 3 to 8, **characterised in that** the engagement means (20) associated with the support of the hoop (6) in the horizontal direction is formed by a sheet metal angle (21) arranged internally on the covering end region, the free downward-pointing profiled leg (22) of which sheet metal angle (21) co-operates with a vertically aligned profiled web (23) of the longitudinal belt (4).

10. Tarpaulin according to claim 9, **characterised in that** the clear spacing between an inner face (25) of a vertically aligned bend (24) of the angular end part (8) of the hoop (6) covering the upper longitudinal belt (4) and the outer face aligned in parallel of the bend of the sheet metal angle (21) arranged on the inside, the free downward-pointing profiled leg (22) of which co-operates with the vertically aligned profiled web (23) of the longitudinal belt (4), is greater than the spacing of the associated faces of the vertically aligned profiled webs of the upper longitudinal belt (4).

11. Tarpaulin according to claim 10, **characterised in that** the regions of the engagement means co-operating with the profiled webs of the upper longitudinal belt (4) are equipped with a plastic casing.

12. Tarpaulin according to any one claims 1 to 8, **characterised in that** the engagement means are designed as sliding blocks (50, 51).

## Revendications

1. Bâche pour carrosseries de véhicule ou conteneurs, avec des parois frontales et latérales, rigides ou flexibles, et des membrures longitudinales **(4)** supérieures, délimitant la hauteur de carrosserie vers le haut, formées par des glissières profilées, toit bâché pour lequel une bâche **(5)**, recouvrant la zone de toiture de la carrosserie, est portée par des arceaux **(6),** faisant la largeur de la surface de chargement et soutenus sur les membrures longitudinales de la carrosserie, les arceaux **(6),** disposés à des espacements les uns des autres réguliers, prédéterminés, et reliés de façon désolidarisable à la bâche **(5)** et couvrant la membrure longitudinale supérieure **(4),** étant soutenus des deux côtés par une emprise avec liaison par ajustement de forme, en direction horizontale et verticale, sur les nervures profilées, orientées dans la direction longitudinale, des membrures longitudinales **(4)** supérieures et, sur chacune des deux extrémités de chaque arceau **(6)**, étant prévu un moyen d'engagement **(9, 10; 20, 32)** coopérant, avec une possibilité de déplacement longitudinal, avec au moins une nervure profilée verticale et avec au moins une nervure profilée horizontale des membrures longitudinales **(4)** supérieures,
**caractérisée en ce que**
les moyens d'engagement **(9, 10; 20, 32)** coopèrent en coulissement avec les nervures profilées et les moyens d'engagement **(10; 32),** associés à l'appui de l'arceau **(6)** en direction verticale, sont reliés de façon désolidarisable à la partie queue **(7)** de l'arceau **(6).**

2. Bâche selon la revendication 1, **caractérisée en ce que** les arceaux **(6)** sont chacun constitués d'une partie queue **(7)** formée par un tronçon de longueur d'un matériau profilé et sont équipés à chacune des deux extrémités d'une partie extrémité **(8)** au moins en forme de cornière, raccordés à la partie queue **(7)**, couvrant une membrure longitudinale supérieure **(4).**

3. Bâche selon la revendication 2, **caractérisée en ce que** les moyens d'engagement **(9),** associés en direction horizontale à l'appui de l'arceau **(6)**, sont chacun disposés sur la partie extrémité **(8)**, couvrant la membrure longitudinale supérieure **(4),** de l'arceau **(6).**

4. Bâche selon la revendication 1 à 3, **caractérisée en ce que** que les moyens d'engagement **(10)**, associés en direction verticale à l'appui de l'arceau **(6)**, sont chacun relié à la partie queue **(7)** de l'arceau **(6).**

5. Bâche selon l'une des revendications 1 à 4, **caractérisée en ce que** le moyen d'engagement **(9),** associé à l'appui de l'arceau **(6)** en direction horizontale, est relié de façon désolidarisable à la partie queue **(7)** de l'arceau **(6)**.

6. Bâche selon l'une des revendication 2 à 5, **caractérisée en ce que** le moyen d'engagement **(10)**, associé à l'appui de l'arceau **(6)** en direction verticale, est chaque fois formé par une partie appendice **(13)** entourant l'extrémité de partie queue **(7)** de l'arceau **(6),** présentant, à son extrémité dépassant de la tige d'arceau, une partie profilée coopérant avec au moins une nervure profilée horizontale de la membrure longitudinale supérieure **(4),** et est susceptible d'être reliée à la partie queue **(7)** de l'arceau **(6),** à l'aide d'un moyen de liaison **(15),** désolidarisable, traversant.

7. Bâche selon la revendication 6, **caractérisée en ce que** le moyen de liaison, désolidarisable, traversant, est réalisé sous la forme d'élément à emboîtement élastique **(14)** avec une tige d'élément à emboîtement **(15)** et une partie élastique **(17)**, dont la tige d'élément à emboîtement **(15)** traverse respectivement un trou traversant **(18, 19)** ménagé dans la zone, entourant la queue **(7)** d'arceau, de la partie appendice **(13)**, et dont la partie élastique **(17)** entoure au moins partiellement la partie appendice **(13)**.

8. Bâche selon la revendication 7, **caractérisée en ce que** chaque partie appendice **(13)**, portant un moyen d'engagement **(10)** associé à l'appui de l'arceau **(6)** en direction verticale, est muni de deux trous traversant **(18, 19),** espacés l'un de l'autre en direction longitudinale de l'arceau, pour le passage de la tige d'élément à emboîtement **(15)** de l'élément à emboîtement élastique **(14)**.

9. Bâche selon l'une des revendications 3 à 8, **caractérisée en ce que** le moyen d'engagement **(20),** associé à l'appui de l'arceau **(6)** en direction horizontale, est formé par une cornière en tôle **(21)** disposée intérieurement sur la zone d'extrémité recouverte, cornière dont la branche de profil **(22),** tournée vers le bas, coopère avec une nervure profilée **(23)**, orientée verticalement, de la membrure longitudinale **(4)**.

10. Bâche selon la revendication 9, **caractérisée en ce que** la distance libre entre une surface intérieure **(25)** du coudage **(24),** orienté verticalement, de la partie extrémité **(8)** en forme de cornière, recouvrant la membrure longitudinale, de l'arceau **(6)** et la surface extérieure, orientée parallèlement, du coudage de la cornière en tôle **(21)** disposée intérieurement, dont la branche profilée **(22)** libre, tournée vers le bas, coopère avec la nervure profilée **(23),** orientée verticalement, de la membrure longitudinale **(4),** est supérieure à l'espacement entre les surfaces afférentes des nervures profilées, orientées verticalement, de la membrure longitudinale supérieure **(4).**

11. Bâche selon la revendication 10, **caractérisée en ce que** les zones, coopérant avec les nervures profilées, de la membrure longitudinale supérieure **(4),** des moyens d'engagement sont munies d'un enveloppement en matière synthétique.

12. Bâche selon l'une des revendications 1 à 8, **caractérisée en ce que** les moyens d'engagement sont réalisés sous la forme de patins de glissement **(50, 51).**
